(19) Europäisches Patentamt / European Patent Office / Office européen des brevets

(11) **EP 3 655 449 B1**

(12) # EUROPÄISCHE PATENTSCHRIFT

(45) Veröffentlichungstag und Bekanntmachung des Hinweises auf die Patenterteilung:
**07.06.2023 Patentblatt 2023/23**

(21) Anmeldenummer: **18743487.3**

(22) Anmeldetag: **19.07.2018**

(51) Internationale Patentklassifikation (IPC):
***C08F 230/08*** (2006.01) ***C09D 143/04*** (2006.01)
***C08K 5/57*** (2006.01) ***C09J 143/04*** (2006.01)

(52) Gemeinsame Patentklassifikation (CPC):
(C-Sets verfügbar)
**C09D 143/04; C08F 220/1818; C08K 5/57; C09J 143/04; C09J 183/04** (Forts.)

(86) Internationale Anmeldenummer:
**PCT/EP2018/069678**

(87) Internationale Veröffentlichungsnummer:
**WO 2019/016332 (24.01.2019 Gazette 2019/04)**

(54) **VERFAHREN ZUR HERSTELLUNG EINES FEUCHTVERNETZENDEN HAFTKLEBSTOFFS, FEUCHTVERNETZENDER HAFTKLEBSTOFF UND KLEBEBAND**

METHOD FOR PRODUCING A MOISTURE CROSSLINKED ADHESIVE, MOISTURE CROSSLINKED ADHESIVE AND ADHESIVE TAPE

PROCÉDÉ DE FABRICATION D’UN ADHÉSIF RÉTICULÉ PAR L’HUMIDITÉ, ADHÉSIF RÉTICULÉ PAR L’HUMIDITÉ ET RUBAN ADHÉSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2017 DE 102017116433**

(43) Veröffentlichungstag der Anmeldung:
**27.05.2020 Patentblatt 2020/22**

(73) Patentinhaber: **Lohmann GmbH & Co. KG**
**56567 Neuwied (DE)**

(72) Erfinder:
- **BRITZ, Jochen**
  **56220 Urmitz (DE)**
- **MARTENS, Viktor**
  **56316 Hanroth (DE)**

(74) Vertreter: **Okoampah, Rene**
**df-mp Dörries Frank-Molnia & Pohlman**
**Patentanwälte Rechtsanwälte PartG mbB**
**Theatinerstraße 16**
**80333 München (DE)**

(56) Entgegenhaltungen:
**EP-A1- 2 801 596** **DE-A1-102004 033 728**
**JP-A- H04 114 078** **US-A- 4 509 949**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
C08F 220/1818, C08F 220/18, C08F 220/20,
C08F 230/085

## Beschreibung

Technisches Gebiet

Die vorliegende Erfindung betrifft ein Verfahren zur Herstellung eines feuchtvernetzen Haftklebstoffs, einen feuchtvernetzten Haftklebstoff und ein Klebeband.

Hintergrund der Erfindung

Feuchtvernetzende Haftklebstoffe, oft auch als feuchtigkeitshärtende Haftklebstoffe, drucksensitive Klebstoffe oder "pressure sensitive adhesives" (PSA) bezeichnet, sind aus dem Stand der Technik bekannt. Es ist bekannt, feuchtvernetzende Haftklebstoffe als Dichtstoffe und Beschichtungen zu verwenden. Zudem sind Anwendungen bekannt, bei welchen feuchtvernetzende Haftklebstoffe als elastische Klebstoffe verwendet werden, insbesondere zur Anwendung für Klebebänder. Feuchtvernetzende Haftklebstoffe weisen in der Regel einen Grundstoff auf Polymerbasis auf, mithin im Wesentlichen in Ketten ausgebildete Makromoleküle sowie Derivate solcher Makromoleküle.

Für eine effiziente Haftung eines feuchtvernetzenden Haftklebstoffs spielen vor allem die innere Stabilität, das heißt die Kohäsionseigenschaften, die Ausbildung von Haftkräften an der Kontaktfläche des Haftklebstoffs, das heißt die Adhäsion, die mechanische, chemische und thermische Resistenz und die Benetzbarkeit eine signifikante Rolle. Feuchtvernetzende Haftklebstoffe benötigen sowohl eine gute Adhäsion, um ein starkes Anhaften auf dem zu verklebenden Material bereitzustellen, sowie eine genügend große Kohäsion, um den Zusammenhalt der Verbindung innerhalb des Haftklebstoffs zu gewährleisten. Die Kohäsion hängt dabei maßgeblich von der Quervernetzung in Form von chemischen Bindungen zwischen den Makromolekülen ab. Folglich sind für Haftklebstoffe Quervernetzungsreaktionen essenziell für ein effizientes Haften. Polymere ohne oder mit nur geringer Quervernetzungsdichte sind als Haftklebstoffe aufgrund der daraus resultierenden geringen Kohäsion in der Regel unbrauchbar. Andererseits weisen Polymere mit einer hohen Kohäsion lediglich eine geringe Adhäsion auf, da die Adhäsion in der Regel ab einer bestimmten Quervernetzungsdichte abnimmt. Die mechanischen Eigenschaften eines Haftklebstoffs hängen folglich insbesondere von der Adhäsion zum jeweiligen Untergrund, der Kohäsion und deren Verhältnis zueinander ab. Weiterhin ausschlaggebend für die mechanischen Eigenschaften eines Haftklebstoffs sind dessen Viskoelastizität und dessen Tack, das heißt die Klebrigkeit des Haftklebstoffs.

Es ist bekannt, das Adhäsionsvermögens von Haftklebstoffen durch Beimengen bestimmter Zusätze zu verbessern oder mechanische Eigenschaften des Klebstoffs zu erhöhen.

Die EP 2 883 926 B1 beschreibt einen Haftklebstoff mit verbesserter Klebkraft und hoher Scherfestigkeit durch Verwenden eines Gemisches aus einem Polymethacrylat, einem Synthesekautschuk und einem Kohlenwasserstoffharz sowie einem Tackifier.

Aus der WO 2007/085622 A1 ist bekannt, das Zusammensetzungen aus Polymeren mit funktionellen Silangruppen gute Haftungseigenschaften auch bei starker Belastung durch Feuchtigkeit aufweisen.

Die WO 2014/029837 A1 zeigt die Verwendung eines Tetramethyl-stannoxydicarboxylats als Katalysator zur Quervernetzung von silanhärtenden Zusammensetzungen.

Ein Nachteil bekannter Haftklebstoffe ist, dass der jeweilige Haftklebstoff hinsichtlich seiner Eigenschaften, insbesondere seiner mechanischen Eigenschaften, jeweils nur für einen bestimmten Anwendungsfall oder einen engen Bereich von Anwendungen mehr oder minder optimal ausgebildet ist und für Anwendungsfälle mit leicht abweichenden Anforderungen bereits nicht mehr geeignet ist, insbesondere in Hinblick auf Schälfestigkeit, Scherfestigkeit oder Reißfestigkeit.

Darstellung der Erfindung

Ausgehend von dem bekannten Stand der Technik ist es eine Aufgabe der vorliegenden Erfindung, einen verbesserten Haftklebstoff, ein entsprechendes Verfahren zur Herstellung eines verbesserten Haftklebstoffs, sowie ein verbessertes Mehrzweck-Klebeband bereitzustellen.

Die Aufgabe wird durch eine Verfahren zur Herstellung eines feuchtvernetzenden Haftklebstoffs mit einstellbaren haftklebenden Eigenschaften, insbesondere dicker Schichten des feuchtevernetzenden Haftklebstoffs, mit den Merkmalen des Anspruchs 1 gelöst. Vorteilhafte Weiterbildungen ergeben sich aus den Unteransprüchen sowie der Beschreibung und den Figuren.

EP 2 801 596 A1 zeigt eine, bei niedriger Temperatur härtbare Beschichtungszusammensetzung.

JP H04 114078 A zeigt einen Acrylat-Klebstoff.

DE 10 2004 033728 A1 zeigt ein Verfahren zum Bearbeiten und Verkleben von Werkstücken.

US 4 509 949 A zeigt ein Wasserverdickungsmittel bestehend aus Copolymeren von vernetzten Acrylsäuren und Ester.

Entsprechend wird ein Verfahren zur Herstellung eines feuchtvernetzenden Haftklebstoffs mit einstellbaren haftklebenden Eigenschaften, insbesondere zur Herstellung dicker Schichten des feuchtevernetzenden Haftklebstoffs, vorgeschlagen, umfassend die Schritte des Bereitstellens eines kovalent gebundene Alkoxysilyl- terminierte Monomere enthaltenden Präpolymers durch UV-initiierte radikalische Polymerisation zum Bereitstellen eines für einen Haftklebstoff geeigneten Grundstoffs; der Zugabe mindestens eines Katalysators zum Präpolymer; und der Feuchtvernetzung dieser Masse zum Bereitstellen eines Haftklebstoffs; und einer Nachbehandlung des Haftklebstoffs zum Einstellen von anwendungsspezifischen mechanischen und rheologischen Eigenschaften zur Optimierung der haftklebenden Eigenschaften wie Adhäsion, Kohäsion, Viskoelastizität und Tack, mittels Wasserdampf und/oder Temperatur.

Durch die Nachbehandlung mittels Wasserdampf und/oder Temperatur können die rheologischen und insbesondere die mechanischen Eigenschaften des feuchtvernetzenden Haftklebstoffs gezielt angepasst werden. Die so erhaltenen beziehungsweise eingestellten Eigenschaften werden nach der Nachbehandlung dabei im Wesentlichen unverändert beibehalten. Mit anderen Worten werden die Eigenschaften des Haftklebstoffs nach Beendigung der Nachbehandlung "eingefroren". Insbesondere können so die haftklebenden Eigenschaften des Haftklebstoffs, wie Adhäsion, Kohäsion, Viskoelastizität und Tack anwendungsspezifisch eingestellt werden. So können insbesondere die Schälfestigkeit, die Scherfestigkeit und/oder die Reißfestigkeit des Haftklebstoffs auf den Anwendungsfall und die zu verklebenden Materialien angepasst werden.

Die Nachbehandlung ermöglicht ferner, auch in dicken Schichten des Haftklebstoffs eine im Wesentlichen gleichmäßige Quervernetzungsdichte zu erzielen. Ein nachbehandelter Haftklebstoff eignet sich folglich besonders für den Einsatz als Dickschicht-Haftklebstoff.

Unter Feuchtvernetzung wird hier insbesondere ein Verfahren zum Quervernetzen verstanden. Im Falle von Alkoxysilyl-aufweisenden Polymeren bilden diese unter Vorhandensein von Feuchte Netzwerke zwischen Polymerketten aus. Dabei werden die Alkoxylsilan-Gruppen eingangs zu Silanolen hydrolysiert. Anschließend erfolgt eine Reaktion der Silanole untereinander und ein Anbinden an weitere Alkoxylsilane zum Ausbilden kovalent gebundener Siloxane unter Freisetzung von Alkanolen.

Als "dicke Schicht" wird in dieser Anmeldung eine Schicht mit einer Dicke größer oder gleich als 0,5 mm verstanden. Bevorzugt liegt die Dicke einer dicken Schicht bei 0,5 mm bis 3 mm, besonders bevorzugt bei 0,5 mm bis 1,5 mm.

Gemäß einer weiteren bevorzugten Ausführung beträgt der Anteil der kovalent gebundenen Alkoxysilyl- terminierten Monomere im Präpolymer zwischen 0,05 bis 10 Gew.-%, bevorzugt zwischen 0,08 und 7 Gew.-% und besonders bevorzugt zwischen 0,1 und 5 Gew.-%. Dadurch kann eine besonders günstige Quervernetzungsdichte erzielt werden.

Um den Grad der Feuchtvernetzung besonders genau vorgeben zu können, kann der Katalysator gemäß einer bevorzugten Ausführung bevorzugt mit einem Anteil von 0,001 bis 10 Gew.-%, besonders bevorzugt 0,005 bis 6 Gew.-%, ganz besonders bevorzugt 0,01 bis 2 Gew.-% im Präpolymer enthalten sein, wobei der Katalysator bevorzugt eine Lewis-Säure oder eine Lewis-Base, bevorzugt ein tertiäres Amin oder eine zinnorganische Verbindung, aufweist.

Um einen Haftklebstoff mit einem besonders reinen Polymermaterial zu erhalten, kann der Haftklebstoff mittels Feuchtvernetzung und Substanzpolymerisation lösemittelfrei hergestellt werden. Mit anderen Worten erfolgt die Polymerisierung des Präpolymers mittels Substanzpolymerisation, auch Blockpolymerisation genannt, ohne den Einsatz von Lösungsmitteln. Aufgrund des Fehlens eines Lösemittels birgt die (UV-)Substanzpolymerisation weiterhin toxikologische Vorteile gegenüber einer Polymerisation unter Lösemittelzugabe.

Alternativ kann der der Haftklebstoff auch mittels Feuchtvernetzung und Lösemittelpolymerisation hergestellt werden.

Wie Untersuchungen überraschenderweise gezeigt haben, kann unter anderem eine Quervernetzungsdichte des Haftklebstoffs, insbesondere bei dicken Schichten beziehungsweise, wenn der Haftklebstoff als Dickschicht ausgebildet ist, nochmals erhöht werden, wenn die Nachbehandlung zum Optimieren der haftklebenden Eigenschaften des Haftklebstoffs gemäß einer weiteren bevorzugten Ausführung in Form eines Beaufschlagens mit Wasserdampf, bevorzugt bei 30 bis 100 g Wasser(dampf)/$m^3$ Luft, bevorzugt bei Sättigungsdampfdruck, erfolgt.

Erfindungsgemäß erfolgt die Nachbehandlung zum Optimieren der haftklebenden Eigenschaften des Haftklebstoffs in Form eines Beaufschlagens mit einer Nachbehandlungstemperatur von 60° C bis 150°C, bevorzugt 80° C bis 125° C und besonders bevorzugt bei 120° C.

Ein Haftklebstoff mit besonders vorteilhaften Eigenschaften kann erhalten werden, wenn das Präpolymer auf Basis von Acrylat aufweisenden Polymeren oder auf Basis von Silikonverbindungen, Elastomeren, bevorzugt auf Kautschuk-Basis, oder Polyurethanen bereitgestellt wird und/oder die Alkoxy-Reste der Alkoxysilyl-terminierten Monomere als Methoxy-, Ethoxy-, n-Propoxy, und/oder iso-Propoxy- bis Butoxy-Reste und/oder Mischungen hieraus bereitgestellt werden.

Gemäß einer besonders bevorzugten weiteren Ausführung wird das Präpolymer auf Basis einer Auswahl von Acrylatmonomeren bereitgestellt, wobei die Auswahl unterschiedliche Zusammensetzungen und unterschiedliche Mengenanteile von Acrylaten mit Alkoxysilylanteilen, Acrylaten mit langkettigen ali-phatischen Anteilen, Acrylaten mit kurzkettigen aliphatischen Anteilen und Acrylaten mit kurzkettigen aliphatischen Anteilen sowie zusätzlich einer säurefunktionellen Gruppe umfasst.

Die oben gestellte Aufgabe wird weiterhin durch einen feuchtevernetzten Haftklebstoff mit den Merkmalen des Anspruchs 9 gelöst. Vorteilhafte Weiterbildungen ergeben sich aus den Unteransprüchen sowie der vorliegenden Beschreibung und den Figuren.

Entsprechend wird ein feuchtevernetzter Haftklebstoff vorgeschlagen, umfassend ein kovalent gebundene Alkoxysilyl- terminierte Monomere enthaltendes Präpolymer und mindestens einen Katalysator. Erfindungsgemäß ist der Haftklebstoff zum Einstellen von anwendungsspezifischen mechanischen und/oder rheologischen Eigenschaften zur Optimierung der haftklebenden Eigenschaften wie Adhäsion, Kohäsion, Viskoelastizität und Tack, mittels Wasserdampf und/oder Temperatur nachbehandelt.

Die Nachbehandlung mittels Wasserdampf und/oder Temperatur erlaubt die gezielte nachträgliche Anpassung der rheologischen und insbesondere der mechanischen Eigenschaften des feuchtvernetzenden Haftklebstoffs. Die so erhaltenen beziehungsweise eingestellten Eigenschaften des Haftklebstoffs bleiben nach der Nachbehandlung dabei im Wesentlichen unverändert erhalten. Mit anderen Worten sind die Eigenschaften des Haftklebstoffs nach Beendigung der Nachbehandlung "eingefroren". Insbesondere hinsichtlich der haftklebenden Eigenschaften des Haftklebstoffs, wie Adhäsion, Kohäsion, Viskoelastizität und Tack und somit auch Schälfestigkeit, Scherfestigkeit und/oder Reißfestigkeit des Haftklebstoffs kann dieser so anwendungsspezifisch auf den jeweiligen Anwendungsfall und die zu verklebenden Materialien angepasst werden.

Gemäß einer weiteren bevorzugten Ausführungsform beträgt der Anteil der kovalent gebundenen Alkoxysilylterminierten Monomere im Präpolymer zwischen 0,05 bis 10 Gew.-%, bevorzugt zwischen 0,08 und 7 Gew.-% und besonders bevorzugt zwischen 0,1 und 5 Gew.-%.

Gemäß einer weiteren bevorzugten Ausführungsform ist der Katalysator bevorzugt mit einem Anteil von 0,001 bis 10 Gew.-%, besonders bevorzugt 0,005 bis 6 Gew.-%, ganz besonders bevorzugt 0,01 bis 2 Gew.-% im Präpolymer enthalten, wobei der Katalysator bevorzugt eine Lewis-Säure oder eine Lewis-Base, bevorzugt ein tertiäres Amin oder eine zinnorganische Verbindung, aufweist.

Gemäß einer weiteren bevorzugten Ausführungsform ist der Haftklebstoff mittels Feuchtvernetzung und Substanzpolymerisation lösemittelfrei oder mittels Feuchtvernetzung und Lösemittelpolymerisation hergestellt.

Wenn die Nachbehandlung in Form eines Beaufschlagens mit Wasserdampf, bevorzugt bei 30 bis 100 g Wasser(dampf)/$m^3$ Luft, bevorzugt bei Sättigungsdampfdruck, erfolgt, können die haftklebenden Eigenschaften des Haftklebstoffs in besonders vorteilhafter Weise eingestellt werden.

In Untersuchungen hat sich besonders vorteilhaft herausgestellt, die haftklebenden Eigenschaften des Haftklebstoffs durch eine Nachbehandlung in Form eines Beaufschlagens mit einer Nachbehandlungstemperatur von 60° C bis 150°C, bevorzugt 80° C bis 125° C und besonders bevorzugt bei 120° C, einzustellen.

Gemäß einer weiteren bevorzugten Ausführungsform ist das Präpolymer auf Basis von Acrylat aufweisenden Polymeren oder auf Basis von Silikonverbindungen, Elastomeren, bevorzugt auf Kautschuk-Basis, oder Polyurethanen bereitgestellt und/oder sind die Alkoxy-Reste der Alkoxysilyl-terminierten Monomere als Methoxy-, Ethoxy-, n-Propoxy, und/oder iso-Propoxy- bis Butoxy-Reste und/oder Mischungen hieraus bereitgestellt.

Um einen hinsichtlich seiner Eigenschaften besonders gut zum Haftkleben geeigneten Haftklebstoff zu erhalten, wird das Präpolymer gemäß einer besonders bevorzugten Ausführungsform auf Basis einer Auswahl von Acrylatmonomeren bereitgestellt, wobei die Auswahl unterschiedliche Zusammensetzungen und unterschiedliche Mengenanteile von Acrylaten mit Alkoxysilylanteilen, Acrylaten mit langkettigen aliphatischen Anteilen, Acrylaten mit kurzkettigen aliphatischen Anteilen und Acrylaten mit kurzkettigen aliphatischen Anteilen sowie zusätzlich einer säurefunktionellen Gruppe umfasst.

Gemäß einer weiteren bevorzugten Ausführungsform ist eine Polymerisation des Präpolymers mittels UV-Strahlung initiierbar, wobei der Haftklebstoff bevorzugt einen Photoinitiator aufweist, bevorzugt einen ersten Photoinitiator zum Initiieren einer Präpolymerisation und/oder einen zweiten Photoinitiator zum Initiieren einer Polymerisation während eines Beschichtens.

Die oben gestellte Aufgabe wird weiterhin durch ein Klebeband mit den Merkmalen des Anspruchs 18 gelöst. Vorteilhafte Weiterbildungen des Klebebands ergeben sich aus der vorliegenden Beschreibung und den Figuren.

Entsprechend wird ein Klebeband vorgeschlagen, welches zumindest eine Schicht aus einem feuchtvernetzenden Haftklebstoff gemäß einem vorstehenden Ausführungsformen umfasst.

Gemäß einer besonders bevorzugten Ausführungsform weist die Schicht des Haftklebstoffs eine Schichtdicke von 0,05 mm bis 3 mm, bevorzugt 0,15 mm bis 2,5 mm, besonders bevorzugt 0,25 mm bis 2 mm und ganz besonders bevorzugt 0,5 mm bis 1,5 mm auf.

## Kurze Beschreibung bevorzugter Ausführungsbeispiele

Bevorzugte weitere Ausführungsformen der Erfindung werden durch die nachfolgende Beschreibung mit Bezug

auf die Figuren näher erläutert. Dabei zeigen:

Figur 1 schematisch eine perspektivische Explosionsansicht eines Klebebands mit einer Schicht aus einem feuchtvernetzenden Haftklebstoff;

Figur 2 schematisch ein Diagramm des Rollschälwiderstands eines feuchtvernetzenden Haftklebstoffs über die Nachbehandlungszeit;

Figur 3 schematisch ein Diagramm der Scherfestigkeit eines feuchtvernetzenden Haftklebstoffs über die Nachbehandlungszeit;

Figur 4 schematisch ein Diagramm des Tacks eines feuchtvernetzenden Haftklebstoffs über die Nachbehandlungszeit;

Figur 5 schematisch ein Diagramm der Bruchspannung und der Bruchdehnung eines feuchtvernetzenden Haftklebstoffs über die Nachbehandlungszeit; und

Figur 6 schematisch eine perspektivische Explosionsansicht eines Klebebands gemäß einer weiteren Ausführungsform.

Detaillierte Beschreibung bevorzugter Ausführungsbeispiele

Im Folgenden werden bevorzugte Ausführungsbeispiele mit Bezug auf die Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

In Figur 1 ist schematisch eine perspektivische Explosionsansicht eines Mehrzweck-Klebebands 1 mit einer Schicht 2 aus einem feuchtvernetzenden Haftklebstoff gezeigt. Die Schicht 2 weist im vorliegenden Fall eine Schichtdicke von 500 μm auf. Alternativ können auch andere Schichtdicken vorgesehen werden, bevorzugt im Bereich von 0,5 mm bis 1,5 mm. Die Schicht 1 ist zwischen zwei abziehbaren Überzügen 3 angeordnet, welche vor der Applikation des Klebebands 1 entfernt werden. Das Klebeband 1 ist mithin als Transferband ausgebildet.

Der feuchtvernetzende Haftklebstoff der Schicht 2 ist mittels Substanzpolymerisation hergestellt. Er umfasst einen auf kovalent gebundenen Polymeren basierenden Grundstoff, wobei vor dem Polymerisieren ferner insbesondere Alkoxysilyl-terminierte Monomere beigemengt wurden. Tabelle 1 zeigt die zur Herstellung des Haftklebstoffs verwendeten Monomere gemäß dem ersten Ausführungsbeispiel:

Tabelle 1: Verwendete Monomere

| Akronym | Beschreibung |
|---|---|
| Momomer A | Alkoxysilyl-terminiertes Acrylat |
| Momomer B | Acrylate mit langkettigen, aliphatischen Resten |
| Monomer C | Acrylate mit kurzkettigen, aliphatischen Resten |
| Monomer D | Acrylate mit kurzkettigen, aliphatischen Resten mit einer zusätzlichen sauren funktionellen Gruppe |

Zur Herstellung des feuchtvernetzenden Haftklebstoffs werden in einem ersten Schritt Präpolymere mit kovalent gebundenen Alkoxysilylen in den Polymerketten vorpolymerisiert. Hierzu wurde ein ungesättigtes Alkoxylsilan aufweisendes (Meth-)Acrylat gemäß nachstehender Formel (I) verwendet:

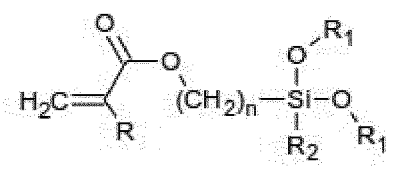

(I)

Die Reste R, $R_1$ und $R_2$ gemäß Formel (I) umfassen generell kurze aliphatische Substituenten. Die Alkoxysilyl-Enden weisen bevorzugt Methoxy-, Ethoxy-, n-Propoxy, und/oder iso-Propoxy- bis Butoxy-Reste und/oder Mischungen

hieraus auf.

Zur Herstellung des Präpolymerisats werden zunächst die Monomere A bis C gemäß Tabelle 1 homogen mit einem Photoinitiator zum Initiieren einer Präpolymerisation für 5 min bei 120 Umdrehungen pro Minute vermischt und bei 23° C mittels Bestrahlung mit UV-Licht bis zu einem Umsatz von 10 %, alternativ auch bis 20 %, polymerisiert.

Das so gewonnene Präpolymerisat wird in einem weiteren Schritt mit dem Monomer D, einem zweiten Photoinitiator zum Initiieren einer Polymerisation während eines Beschichtens sowie einem Katalysator in Form einer zinnorganischen Verbindung für die Feuchtvernetzung modifiziert und die Mischung durch Verrühren für 2 min bei 1800 Umdrehungen pro Minute homogenisiert. Alternativ kann der Katalysator auch in Form eines tertiären Amins bereitgestellt sein.

Die Mengenverteilung der Inhaltsstoffe des feuchtvernetzenden Haftklebstoffs gemäß dem ersten Ausführungsbeispiel ergibt sich entsprechend gemäß Tabelle 2:

Tabelle 2: Mengenverteilung

| Bestanteil | Menge bezogen auf die Gesamtmasse der Mischung |
|---|---|
| Momomer A | 0,2 Gew.-% |
| Momomer B | 81,2 Gew.-% |
| Monomer C | 12 Gew.-% |
| Monomer D | 5 Gew.-% |
| erster Photoinitiator | 0,1 Gew.-% |
| zweiter Photoinitiator | 0,5 Gew.-% |
| Katalysator | 1 Gew.-% |

Die derart modifizierte Masse wird mit einer Schichtdicke von 500 μm auf einen der abziehbaren Überzüge 3 aufgebracht und die so entstandene Schicht 2 mit dem anderen der beiden Überzüge 3 bedeckt.

In einem folgenden Schritt wird der so entstandene Schichtverbund aus erstem Überzug 3, Schicht 1 des Haftklebstoffs und zweitem Überzug 3 durch einen Kanal mit UV-Lampen geführt und bei einem Abstand von 110 mm mit UV-Strahlung von etwa 350 nm bis 400 nm Wellenlänge bestrahlt, so dass die Polymerisation der Haftklebstoffschicht 1 wieder initiiert wird und die Polymermasse bis mindestens 99 % umgesetzt wird.

Nach dem erneuten Polymerisieren kann einer der Überzüge 3 entfernt und das so entstandene Klebeband 1 aufgerollt werden, um das Klebeband 1 in einer kompakten Form bereitstellen zu können.

Gemäß einem zweiten Ausführungsbeispiel ist ein Klebeband 1 entsprechend jenem im ersten Ausführungsbeispiel hergestellt, wobei der Gehalt des Alkoxysilyl-terminiertes Acrylats (Monomer A) bezogen auf die Gesamtmasse des Haftklebstoffs 1 Gew.-% beträgt. Der Gewichtsanteil der Acrylate mit langkettigen, aliphatischen Resten ist entsprechend reduziert auf 80,6 Gew.-%.

Gemäß einem dritten Ausführungsbeispiel ist ein Klebeband 1 entsprechend jenem im ersten Ausführungsbeispiel hergestellt, wobei der Gehalt des Alkoxysilyl-terminiertes Acrylats (Monomer A) bezogen auf die Gesamtmasse des Haftklebstoffs 5 Gew.-% beträgt. Der Gewichtsanteil der Acrylate mit langkettigen, aliphatischen Resten ist entsprechend reduziert auf 76,2 Gew.-%.

Die so gewonnenen Klebebänder 1 werden in einem folgenden Schritt einer Nachbehandlung unterzogen.

Gemäß einer ersten Ausgestaltung umfasst die Nachbehandlung ein Beaufschlagen mit einer Nachbehandlungstemperatur von etwa 120° C für eine Nachbehandlungszeit von 120 min.

Durch die Nachbehandlung gemäß der ersten Ausgestaltung konnte ein in Bezug auf den feuchtvernetzen Haftklebstoff vor der Nachbehandlung erhöhter Gelwert gemessen werden, welcher ein Maß für die Quervernetzung des Haftklebstoffs ist. Die Kohäsion nimmt dabei wie oben bereits beschrieben mit zunehmender Quervernetzung zu.

Der Gelwert wurde in folgender Weise ermittelt. 1 g des Haftklebstoffs wurden 50 ml Toluol beigemengt und bei Raumtemperatur für 2 Tage gelagert. Im Anschluss wurde das Diluent, bestehend aus Toluol und gelösten Polymeren durch einen Nylonfilter mit einer Porengröße von etwa 50 μm abgefiltert und in einem Ofen bei 110° C für 4 Stunden getrocknet. Anschließend wurde der Gelgehalt gewichtsbezogen analysiert und gemäß nachstehender Formel bestimmt:

$$Gelgehalt\ [\%] = \frac{\text{Gewicht an ungelöstem Rest}}{\text{Gewicht des Haftklebstoffs}} \cdot 100$$

Gemäß einer zweiten Ausgestaltung umfasst die Nachbehandlung ein Beaufschlagen mit einer Nachbehandlungstemperatur von etwa 120° C unter gleichzeitiger Beaufschlagung mit Wasserdampf für eine Nachbehandlungszeit von 120 min. Mit steigendem Anteil der Alkoxysilyl-terminierten Monomere in der Zusammensetzung steigt auch die Zunahme der Quervernetzung während der Nachbehandlung.

Durch die Nachbehandlung gemäß der zweiten Ausgestaltung konnte ein in Bezug auf den feuchtvernetzen Haftklebstoff vor der Nachbehandlung erhöhter Gelwert gemessen werden, welcher überraschenderweise nochmals höher liegt, als bei der Nachbehandlung gemäß der ersten Ausgestaltung.

Tabelle 3 zeigt die gemessenen Gelwerte der Klebebänder 1 gemäß den Ausführungsbeispielen 1 bis 3 nach der Nachbehandlung gemäß der ersten Ausgestaltung und gemäß der zweiten Ausgestaltung:

Tabelle 3: Gelwerte nach der Nachbehandlung

| Konzentration des Silan-Monomers A [Gew-%] | Gelwert [%] nach 120° C, 2h | Gelwert [%] nach 120° C, 2h und Dampfbeaufschlagung | Unterschied |
|---|---|---|---|
| 0,2 | 62 | 64 | 2 |
| 1 | 77 | 82 | 5 |
| 5 | 84 | 91 | 7 |

Durch die Nachbehandlung gemäß der zweiten Ausgestaltung konnte eine nochmals verbesserte Quervernetzung erzielt werden.

Durch Variieren der Parameter der Nachbehandlung können die rheologischen und insbesondere die mechanischen Eigenschaften des feuchtvernetzenden Haftklebstoffs gezielt angepasst werden. Nach der Nachbehandlung werden die so erhaltenen beziehungsweise eingestellten Eigenschaften im Wesentlichen unverändert beibehalten. Mit anderen Worten werden die Eigenschaften des Haftklebstoffs nach Beendigung der Nachbehandlung "eingefroren", sie sind damit reproduzierbar.

Die Figuren 2 bis 5 zeigen die sich einstellenden Werte des Rollschälwiderstands (Fig. 2), der Scherfestigkeit (Fig. 3), des Tacks (Fig. 4) und der Bruchspannung und der Bruchdehnung (Fig. 5) des feuchtvernetzenden Haftklebstoffs gemäß dem ersten Ausführungsbeispiel mit zunehmender Nachbehandlungsdauer.

Der Rollschälwiderstand wurde bestimmt nach DIN EN 1939 (2003). Entsprechend wurde eine 25 mm breite Haftklebstoffschicht von einer zuvor gereinigten Testplatte aus Stahl in einem 90° Winkel abgezogen. Die Prüfgeschwindigkeit betrug 300 mm/min.

Der Rollschälwiderstand beträgt, wie auch Figur 2 zu entnehmen, ohne Nachbehandlung etwa 45,5 N / 25 mm, bei einer Nachbehandlungszeit von 2 min etwa 58 N / 25 mm, bei 5 min Nachbehandlungszeit etwa 54,5 N / 25 mm, bei 10 min Nachbehandlungszeit etwa 45 N / 25 mm und bei 30 min Nachbehandlungszeit etwa 38,5 N / 25 mm.

Zur Ermittlung der Scherfestigkeit des Klebebands 1 wurde ein 25 mm x 25 mm messendes Segment aus dem Klebeband geschnitten und an zwei zuvor angeraute und gereinigte Stahlplatten geklebt. Nach dem verbinden wurden die Platten mit einer 5 kg Rolle für 30 Sekunden gepresst und für 24 h bei einer Last von 1 kg gelagert. Anschließend wurde der so entstandene Prüfling mit einer Joch-Geschwindigkeit von 10 mm/min geschert.

Wie Figur 3 zu entnehmen, beträgt die Scherfestigkeit ohne Nachbehandlung etwa 41 N / 625 $mm^2$, bei einer Nachbehandlungszeit von 2 min etwa 135 N / 625 $mm^2$, bei 5 min Nachbehandlungszeit etwa 200 N / 625 $mm^2$, bei 10 min Nachbehandlungszeit etwa 270 N / 625 $mm^2$ und bei 30 min Nachbehandlungszeit etwa 350 N / 625 $mm^2$.

Die Ermittlung der Bruchspannung und der Bruchdehnung erfolgte in Anlehnung an DIN EN 53504. Das Klebeband wurde in 25 mm breite Streifen mit einer Länge von 100 mm geschnitten, die Überzüge 3 entfernt und mit einer Einspannlänge von 50 mm eingespannt. Die Prüfgeschwindigkeit betrug 300 mm/min.

Wie Figur 4 zu entnehmen, beträgt der Tack ohne Nachbehandlung etwa 85 N / 25 mm, bei einer Nachbehandlungszeit von 2 min etwa 74 N / 25 mm, bei 5 min Nachbehandlungszeit etwa 66 N / 25 mm, bei 10 min Nachbehandlungszeit etwa 62 N / 25 mm und bei 30 min Nachbehandlungszeit etwa 52 N / 25 mm.

Zur Ermittlung des Tacks wurden das Klebeband 1 in Streifen von 25 mm Breite und 250 mm Länge geschnitten. Nach Formen einer Rolle mit den Klebstoffstreifen wurde die so gebildete und fixierte Rolle durch die Prüfmaschine mit einer Geschwindigkeit von 100 mm/min auf eine senkrecht zur Prüfrichtung angeordnete Stahlplatte aufgebracht und gleichzeitig wieder abgeschält. Dabei wurde der Mittelwert der resultierenden Kräfte ermittelt.

Wie in Figur 5 gezeigt, betragen Bruchspannung und Bruchdehnung ohne Nachbehandlung etwa 8,8 N/$mm^2$ bei etwa 950 % Dehnung, bei einer Nachbehandlungszeit von 2 min etwa 9 N/$mm^2$ bei etwa 1650 % Dehnung, bei 5 min Nachbehandlungszeit etwa 9,7 N/$mm^2$ bei etwa 2100 % Dehnung, bei 10 min Nachbehandlungszeit etwa 10,2 N/$mm^2$ bei etwa 1400 % Dehnung und bei 30 min Nachbehandlungszeit etwa 14 N/$mm^2$ bei etwa 1050 % Dehnung.

Wie aus den Figuren 2 bis 5 sofort ersichtlich, können die mechanischen Eigenschaften des feuchtvernetzenden Haftklebstoffs und folglich des Klebebands 1 durch die Nachbehandlung gezielt geändert und eingestellt werden, so

dass das Klebeband 1 auf den jeweiligen Anwendungsfall beziehungsweise Zweck optimiert ist. Figur 6 zeigt ein doppelseitiges Klebeband 1 gemäß einer weiteren Ausführungsform. Anders als das Klebeband 1 gemäß Figur 1 ist beim Klebeband 1 gemäß Figur 6 jeweils eine Schicht 2 aus einem feuchtvernetzenden Haftklebstoff auf beiden Seiten eines Trägers 4 aufgebracht. Eine der beiden Schichten 2 ist auf der dem Träger 4 abgewandten Seite mit einem ablösbaren silikonisierten Überzug 3 bedeckt.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

Bezugszeichenliste

1 Klebeband
2 Schicht
3 Überzug
4 Träger

## Patentansprüche

**1.** Verfahren zur Herstellung eines feuchtvernetzenden Haftklebstoffs mit einstellbaren haftklebenden Eigenschaften, umfassend die folgenden Schritte:

a. Bereitstellen eines kovalent gebundene Alkoxysilyl- terminierte Monomere enthaltenden Präpolymers durch UV-initiierte radikalische Polymerisation zum Bereitstellen eines für einen Haftklebstoff geeigneten Grundstoffs;
b. Zugabe mindestens eines Katalysators zum Präpolymer;
c. Feuchtvernetzung dieser Masse zum Bereitstellen eines Haftklebstoffs; und
d. Nachbehandlung des Haftklebstoffs zum Einstellen von anwendungsspezifischen mechanischen und/oder rheologischen Eigenschaften zur Optimierung der haftklebenden Eigenschaften wie Adhäsion, Kohäsion, Viskoelastizität und Tack, mittels Wasserdampf und Temperatur; wobei die Nachbehandlung zum Optimieren der haftklebenden Eigenschaften des Haftklebstoffs in Form eines Beaufschlagens mit einer Nachbehandlungstemperatur von 60° C bis 150°C, bevorzugt 80° C bis 125° C und besonders bevorzugt bei 120° C erfolgt.

**2.** Verfahren gemäß Anspruch 1, **dadurch gekennzeichnet, dass** der Anteil der kovalent gebundenen Alkoxysilyl-terminierten Monomere im Präpolymer zwischen 0,05 bis 10 Gew.-% beträgt, bevorzugt zwischen 0,08 und 7 Gew.-% und besonders bevorzugt zwischen 0,1 und 5 Gew.-%.

**3.** Verfahren gemäß einem der vorstehenden Ansprüche, **dadurch gekennzeichnet, dass** der Katalysator bevorzugt mit einem Anteil von 0,001 bis 10 Gew.-%, besonders bevorzugt 0,005 bis 6 Gew.-%, ganz besonders bevorzugt 0,01 bis 2 Gew.-% im Präpolymer enthalten ist, wobei der Katalysator bevorzugt eine Lewis-Säure oder eine Lewis-Base, bevorzugt ein tertiäres Amin oder eine zinnorganische Verbindung, aufweist.

**4.** Verfahren gemäß einem der vorstehenden Ansprüche, **dadurch gekennzeichnet, dass** der Haftklebstoff mittels Feuchtvernetzung und Substanzpolymerisation lösemittelfrei hergestellt wird, oder dass der Haftklebstoff mittels Feuchtvernetzung und Lösemittelpolymerisation hergestellt wird.

**5.** Verfahren gemäß einem der vorstehenden Ansprüche, **dadurch gekennzeichnet, dass** die Nachbehandlung zum Optimieren der haftklebenden Eigenschaften des Haftklebstoffs in Form eines Beaufschlagens mit Wasserdampf, bevorzugt bei 30 bis 100 g Wasser(dampf)/$m^3$ Luft, bevorzugt bei Sättigungsdampfdruck, erfolgt.

**6.** Verfahren gemäß einem der vorstehenden Ansprüche, **dadurch gekennzeichnet, dass** das Präpolymer auf Basis von Acrylat aufweisenden Polymeren oder auf Basis von Silikonverbindungen, Elastomeren, bevorzugt auf Kautschuk-Basis, oder Polyurethanen bereitgestellt wird und/oder die Alkoxy-Reste der Alkoxysilyl-terminierten Monomere als Methoxy-, Ethoxy-, n-Propoxy, und/oder iso-Propoxy- bis Butoxy-Reste und/oder Mischungen hieraus bereitgestellt werden.

**7.** Verfahren gemäß einem der vorstehenden Ansprüche, **dadurch gekennzeichnet, dass** das Präpolymer auf Basis einer Auswahl von Acrylatmonomeren bereitgestellt wird, wobei die Auswahl unterschiedliche Zusammensetzungen

und unterschiedliche Mengenanteile von Acrylaten mit Alkoxysilylanteilen, Acrylaten mit langkettigen ali-phatischen Anteilen, Acrylaten mit kurzkettigen aliphatischen Anteilen und Acrylaten mit kurzkettigen aliphatischen Anteilen sowie zusätzlich einer säurefunktionellen Gruppe umfasst.

**8.** Feuchtevernetzter Haftklebstoff, umfassend ein kovalent gebundene Alkoxysilyl-terminierte Monomere enthaltendes Präpolymer und mindestens einen Katalysator, **dadurch gekennzeichnet, dass** der Haftklebstoff zum Einstellen von anwendungsspezifischen mechanischen und/oder rheologischen Eigenschaften zur Optimierung der haftklebenden Eigenschaften wie Adhäsion, Kohäsion, Viskoelastizität und Tack, mittels Wasserdampf und Temperatur nachbehandelt ist; wobei die Nachbehandlung zum Optimieren der haftklebenden Eigenschaften des Haftklebstoffs in Form eines Beaufschlagens mit einer Nachbehandlungstemperatur von 60° C bis 150°C, bevorzugt 80° C bis 125° C und besonders bevorzugt bei 120° C erfolgt.

**9.** Feuchtevernetzter Haftklebstoff gemäß Anspruch 8, **dadurch gekennzeichnet, dass** der Anteil der kovalent gebundenen Alkoxysilyl- terminierten Monomere im Präpolymer zwischen 0,05 bis 10 Gew.-% beträgt, bevorzugt zwischen 0,08 und 7 Gew.-% und besonders bevorzugt zwischen 0,1 und 5 Gew.-%.

**10.** Feuchtevernetzter Haftklebstoff gemäß Anspruch 8 oder 9, **dadurch gekennzeichnet, dass** der Katalysator bevorzugt mit einem Anteil von 0,001 bis 10 Gew.-%, besonders bevorzugt 0,005 bis 6 Gew.-%, ganz besonders bevorzugt 0,01 bis 2 Gew.-% im Präpolymer enthalten ist, wobei der Katalysator bevorzugt eine Lewis-Säure oder eine Lewis-Base, bevorzugt ein tertiäres Amin oder eine zinnorganische Verbindung, aufweist.

**11.** Feuchtevernetzter Haftklebstoff gemäß einem der Ansprüche 8 bis 10, **dadurch gekennzeichnet, dass** der Haftklebstoff mittels Feuchtvernetzung und Substanzpolymerisation lösemittelfrei hergestellt ist, oder dass der Haftklebstoff mittels Feuchtvernetzung und Lösemittelpolymerisation hergestellt ist.

**12.** Feuchtevernetzter Haftklebstoff gemäß einem der Ansprüche 8 bis 11, **dadurch gekennzeichnet, dass** die haftklebenden Eigenschaften des Haftklebstoffs durch eine Nachbehandlung in Form eines Beaufschlagens mit Wasserdampf, bevorzugt bei 30 bis 100 g Wasser(dampf)/$m^3$ Luft, bevorzugt bei Sättigungsdampfdruck, angepasst sind.

**13.** Feuchtevernetzter Haftklebstoff gemäß einem der Ansprüche 8 bis 12, **dadurch gekennzeichnet, dass** das Präpolymer auf Basis von Acrylat aufweisenden Polymeren oder auf Basis von Silikonverbindungen, Elastomeren, bevorzugt auf Kautschuk-Basis, oder Polyurethanen bereitgestellt wird und/oder die Alkoxy-Reste der Alkoxysilyl-terminierten Monomere als Methoxy-, Ethoxy-, n-Propoxy, und/oder iso-Propoxy- bis Butoxy-Reste und/oder Mischungen hieraus bereitgestellt werden.

**14.** Feuchtevernetzter Haftklebstoff gemäß einem der Ansprüche 8 bis 13, **dadurch gekennzeichnet, dass** das Präpolymer auf Basis einer Auswahl von Acrylatmonomeren bereitgestellt wird, wobei die Auswahl unterschiedliche Zusammensetzungen und unterschiedliche Mengenanteile von Acrylaten mit Alkoxysilylanteilen, Acrylaten mit langkettigen aliphatischen Anteilen, Acrylaten mit kurzkettigen aliphatischen Anteilen und Acrylaten mit kurzkettigen aliphatischen Anteilen sowie zusätzlich einer säurefunktionellen Gruppe umfasst.

**15.** Feuchtvernetzender Haftklebstoff gemäß einem der Ansprüche 8 bis 14, **dadurch gekennzeichnet, dass** eine Polymerisation des Präpolymers mittels UV-Strahlung initiierbar ist, wobei er bevorzugt einen Photoinitiator aufweist, bevorzugt einen ersten Photoinitiator zum Initiieren einer Präpolymerisation und/oder einen zweiten Photoinitiator zum Initiieren einer Polymerisation während eines Beschichtens.

**16.** Klebeband, umfassend zumindest eine Schicht aus einem feuchtvernetzenden Haftklebstoff gemäß einem der Ansprüche 8 bis 15.

## Claims

**1.** Method for producing a moisture-crosslinking pressure-sensitive adhesive with adjustable pressure-sensitive adhesive properties, comprising the following steps:

a. providing, by means of UV-initiated radical polymerisation, a prepolymer containing covalently bonded alkoxysilyl-terminated monomers to provide a base material suitable for a pressure-sensitive adhesive;
b. addition of at least one catalyst to the prepolymer;

c. moisture-crosslinking of this composition to provide a pressure-sensitive adhesive; and

d. post treatment of the pressure-sensitive adhesive to adjust application-specific mechanical and/or rheological properties for optimising the pressure-sensitive adhesive properties such as adhesion, cohesion, viscoelasticity and tack, by means of water vapour and temperature; wherein the post treatment for optimising the pressure-sensitive adhesive properties of the pressure-sensitive adhesive occurs in the form of exposure to a post treatment temperature of 60°C to 150°C, preferably 80°C to 125°C and most preferably at 120°C.

2. Method according to claim 1, **characterised in that** the proportion of covalently bonded alkoxysilyl-terminated monomers in the prepolymer amounts to between 0.05 and 10 wt.%, preferably between 0.08 and 7 wt.% and most preferably between 0.1 and 5 wt.%.

3. Method according to any one of the preceding claims, **characterised in that** the catalyst is preferably contained in the prepolymer in a proportion of 0.001 to 10 wt.%, most preferably 0.005 to 6 wt.%, particularly most preferably 0.01 to 2 wt.%, wherein the catalyst preferably has a Lewis acid or a Lewis base, preferably a tertiary amine or an organotin compound.

4. Method according to any one of the preceding claims, **characterised in that** the pressure-sensitive adhesive is produced solvent-free by moisture-crosslinking and bulk polymerisation or **in that** the pressure-sensitive adhesive is produced by moisture-crosslinking and solvent polymerisation.

5. Method according to any one of the preceding claims, **characterised in that** the post treatment for optimising the pressure-sensitive adhesive properties of the pressure-sensitive adhesive occurs by exposure to water vapour, preferably at 30 to 100 g water (vapour)/$m^3$ air, preferably at saturation vapour pressure.

6. Method according to any one of the preceding claims, **characterised in that** the prepolymer is provided on the basis of acrylate-containing polymers or on the basis of silicon compounds, elastomers, preferably rubber-based, or polyurethanes and/or the alkoxy residues of the alkoxysilyl-terminated monomers are provided as methoxy, ethoxy, n-propoxy and/or iso-propoxy to butoxy radicals and/or mixtures thereof.

7. Method according to any one of the preceding claims, **characterised in that** the prepolymer is provided on the basis of a selection of acrylate monomers, wherein the selection comprises different compositions and different quantitative proportions of acrylates with alkoxysilyl parts, acrylates with long-chain aliphatic parts, acrylates with short-chain aliphatic parts, and acrylates with short-chain aliphatic parts as well as an acid-functional group.

8. Moisture-crosslinked pressure-sensitive adhesive comprising a prepolymer containing covalently bonded alkoxysilyl-terminated monomers and at least one catalyst, **characterised in that** the pressure-sensitive adhesive is posttreated by means of water vapour and temperature to adjust application-specific mechanical and/or rheological properties in order to optimise the pressure-sensitive adhesive properties such as adhesion, cohesion, viscoelasticity and tack; wherein the post treatment for optimising the pressure-sensitive adhesive properties of the pressure-sensitive adhesive occurs by exposure to a post treatment temperature of 60°C to 150°C, preferably 80°C to 125°C and most preferably at 120°C.

9. Moisture-crosslinked pressure-sensitive adhesive according to claim 8, **characterised in that** the proportion of covalently bonded alkoxysilyl-terminated monomers in the prepolymer amounts to between 0.05 and 10 wt.%, preferably between 0.08 and 7 wt.% and most preferably between 0.1 and 5 wt.%.

10. Moisture-crosslinked pressure-sensitive adhesive according to claim 8 or 9, **characterised in that** the catalyst is contained in the prepolymer in a proportion of preferably 0.001 to 10 wt.%, most preferably 0.005 to 6 wt.%, particularly most preferably 0.01 to 2 wt.%, wherein the catalyst preferably has a Lewis acid or a Lewis base, preferably a tertiary amine or an organotin compound.

11. Moisture-crosslinked pressure-sensitive adhesive according to any one of claims 8 to 10, **characterised in that** the pressure-sensitive adhesive is produced solvent-free by moisture-crosslinking and bulk polymerisation or **in that** the pressure-sensitive adhesive is produced by moisture-crosslinking and solvent polymerisation.

12. Moisture-crosslinked pressure-sensitive adhesive according to any one of claims 8 to 11, **characterised in that** the pressure-sensitive adhesive properties of the pressure-sensitive adhesive are adjusted by a post treatment in the form of exposure to water vapour, preferably at 30 to 100 g water (vapour)/$m^3$ air, preferably at saturation vapour

pressure.

**13.** Moisture-crosslinked pressure-sensitive adhesive according to any one of claims 8 to 12, **characterised in that** the prepolymer is provided on the basis of acrylate-containing polymers or on the basis of silicon compounds, elastomers, preferably rubber-based, or polyurethanes and/or the alkoxy residues of the alkoxysilyl-terminated monomers are provided as methoxy, ethoxy, n-propoxy and/or iso-propoxy to butoxy radicals and/or mixtures thereof.

**14.** Moisture-crosslinked pressure-sensitive adhesive according to any one of claims 8 to 13, **characterised in that** the prepolymer is provided on the basis of a selection of acrylate monomers, wherein the selection comprises different compositions and different quantitative proportions of acrylates with alkoxysilyl parts, acrylates with long-chain aliphatic parts, acrylates with short-chain aliphatic parts, and acrylates with short-chain aliphatic parts as well as an acid-functional group.

**15.** Moisture-crosslinking pressure-sensitive adhesive according to any one of claims 8 to 14, **characterised in that** a polymerisation of the prepolymer can be initiated by means of UV radiation, wherein it preferably has a photoinitiator, preferably a first photoinitiator for initiating a prepolymerisation and/or a second photoinitiator for initiating a polymerisation during a coating process.

**16.** Adhesive tape comprising at least one layer of a moisture-crosslinking pressure-sensitive adhesive according to any one of claims 8 to 15.

**Revendications**

**1.** Procédé de fabrication d'un adhésif sensible à la pression réticulant à l'humidité présentant des propriétés adhésives réglables, comprenant les étapes suivantes consistant à :

a. préparer un prépolymère contenant des monomères à terminaison alcoxysilyle liés de manière covalente par polymérisation radicalaire initiée par UV pour préparer une matière première appropriée pour un adhésif sensible à la pression ;
b. ajouter au moins un catalyseur au prépolymère ;
c. réticuler cette masse à l'état humide pour préparer un adhésif sensible à la pression ; et
d. post-traiter l'adhésif sensible à la pression pour régler des propriétés mécaniques et/ou rhéologiques spécifiques à l'application pour optimiser les propriétés adhésives telles que l'adhérence, la cohésion, la viscoélasticité et le collage, au moyen de vapeur d'eau et de température ; dans lequel le post-traitement pour optimiser les propriétés adhésives de l'adhésif sensible à la pression s'effectue sous la forme d'une exposition à une température de post-traitement de 60 °C à 150 °C, de préférence de 80 °C à 125 °C et le plus préférentiellement de 120 °C.

**2.** Procédé selon la revendication 1, **caractérisé en ce que** la proportion de monomères à terminaison alcoxysilyle liés de manière covalente dans le prépolymère est comprise entre 0,05 et 10 % en poids, de préférence entre 0,08 et 7 % en poids et le plus préférentiellement entre 0,1 et 5 % en poids.

**3.** Procédé selon l'une quelconque des revendications précédentes, **caractérisé en ce que** le catalyseur est de préférence présent dans le prépolymère dans une proportion de 0,001 à 10 % en poids, le plus préférentiellement de 0,005 à 6 % en poids, encore plus préférentiellement de 0,01 à 2 % en poids, dans lequel le catalyseur présente de préférence un acide de Lewis ou une base de Lewis, de préférence une amine tertiaire ou un composé organostannique.

**4.** Procédé selon l'une quelconque des revendications précédentes, **caractérisé en ce que** l'adhésif sensible à la pression est fabriqué sans solvant par réticulation à l'humidité et polymérisation de substance, ou **en ce que** l'adhésif sensible à la pression est fabriqué par réticulation à l'humidité et polymérisation de solvant.

**5.** Procédé selon l'une quelconque des revendications précédentes, **caractérisé en ce que** le post-traitement pour optimiser les propriétés adhésives de l'adhésif sensible à la pression est effectué sous la forme d'une exposition à de la vapeur d'eau, de préférence entre 30 et 100 g de (vapeur d')eau/m3 d'air, de préférence à une pression de vapeur saturée.

6. Procédé selon l'une quelconque des revendications précédentes, **caractérisé en ce que** le prépolymère est préparé sur la base de polymères présentant un acrylate ou à base de composés de silicone, d'élastomères, de préférence à base de caoutchouc, ou de polyuréthanes et/ou les radicaux alcoxy des monomères à terminaison alcoxysilyle sont préparés sous forme de radicaux méthoxy, éthoxy, n-propoxy, et/ou iso-propoxy à butoxy et/ou de mélanges de ceux-ci.

7. Procédé selon l'une quelconque des revendications précédentes, **caractérisé en ce que** le prépolymère est préparé sur la base d'une sélection de monomères d'acrylate, dans lequel la sélection comprend différentes compositions et différentes proportions quantitatives d'acrylates avec des parties alcoxysilyle, d'acrylates avec des parties aliphatiques à longue chaîne, d'acrylates avec des parties aliphatiques à courte chaîne et d'acrylates avec des parties aliphatiques à courte chaîne, ainsi qu'en supplément un groupe fonctionnel acide.

8. Adhésif sensible à la pression réticulé à l'humidité, comprenant un prépolymère contenant des monomères à terminaison alcoxysilyle liés par covalence et au moins un catalyseur, **caractérisé en ce que** l'adhésif sensible à la pression est post-traité au moyen de vapeur d'eau et de température pour régler des propriétés mécaniques et/ou rhéologiques spécifiques à l'application afin d'optimiser les propriétés adhésives telles que l'adhésion, la cohésion, la viscoélasticité et le collage ; dans lequel le post-traitement pour optimiser les propriétés adhésives de l'adhésif sensible à la pression s'effectue sous la forme d'une exposition à une température de post-traitement de 60 °C à 150 °C, de préférence de 80 °C à 125 °C et le plus préférentiellement à 120 °C.

9. Adhésif sensible à la pression réticulé à l'humidité selon la revendication 8, **caractérisé en ce que** la proportion de monomères à terminaison alcoxysilyle liés de manière covalente dans le prépolymère est comprise entre 0,05 et 10 % en poids, de préférence entre 0,08 et 7 % en poids et le plus préférentiellement entre 0,1 et 5 % en poids.

10. Adhésif sensible à la pression réticulé à l'humidité selon la revendication 8 ou 9, **caractérisé en ce que** le catalyseur est contenu dans le prépolymère de préférence à raison de 0,001 à 10 % en poids, le plus préférentiellement de 0,005 à 6 % en poids, encore plus préférentiellement de 0,01 à 2 % en poids, dans lequel le catalyseur comprend de préférence un acide de Lewis ou une base de Lewis, de préférence une amine tertiaire ou un composé organostannique.

11. Adhésif sensible à la pression réticulé à l'humidité selon l'une quelconque des revendications 8 à 10, **caractérisé en ce que** l'adhésif sensible à la pression est préparé par réticulation à l'humidité et polymérisation de substances sans solvant, ou **en ce que** l'adhésif sensible à la pression est préparé par réticulation à l'humidité et polymérisation de solvants.

12. Adhésif sensible à la pression réticulé à l'humidité selon l'une quelconque des revendications 8 à 11, **caractérisé en ce que** les propriétés adhésives de l'adhésif sensible à la pression sont adaptées par un post-traitement sous la forme d'une exposition à de la vapeur d'eau, de préférence à 30 à 100 g de (vapeur d')eau/m3 d'air, de préférence à une pression de vapeur saturée.

13. Adhésif sensible à la pression réticulé à l'humidité selon l'une quelconque des revendications 8 à 12, **caractérisé en ce que** le prépolymère est préparé sur la base de polymères présentant un acrylate ou sur la base de composés de silicone, d'élastomères, de préférence à base de caoutchouc, ou de polyuréthanes et/ou les radicaux alcoxy des monomères à terminaison alcoxysilyle sont préparés sous forme de radicaux méthoxy, éthoxy, n-propoxy et/ou iso-propoxy à butoxy et/ou de mélanges de ceux-ci.

14. Adhésif sensible à la pression réticulé à l'humidité selon l'une quelconque des revendications 8 à 13, **caractérisé en ce que** le prépolymère est préparé sur la base d'une sélection de monomères d'acrylate, dans lequel la sélection comprend différentes compositions et différentes proportions d'acrylates avec des parties alcoxysilyle, d'acrylates avec des parties aliphatiques à longue chaîne, d'acrylates avec des parties aliphatiques à courte chaîne et d'acrylates avec des parties aliphatiques à courte chaîne, et en outre un groupe fonctionnel acide.

15. Adhésif sensible à la pression réticulant à l'humidité selon l'une quelconque des revendications 8 à 14, **caractérisé en ce qu'**une polymérisation du prépolymère peut être initiée au moyen d'un rayonnement UV, dans lequel il présente de préférence un photoinitiateur, de préférence un premier photoinitiateur pour initier une prépolymérisation et/ou un second photoinitiateur pour initier une polymérisation pendant un enrobage.

16. Ruban adhésif comprenant au moins une couche d'un adhésif sensible à la pression réticulant à l'humidité selon

l'une quelconque des revendications 8 à 15.

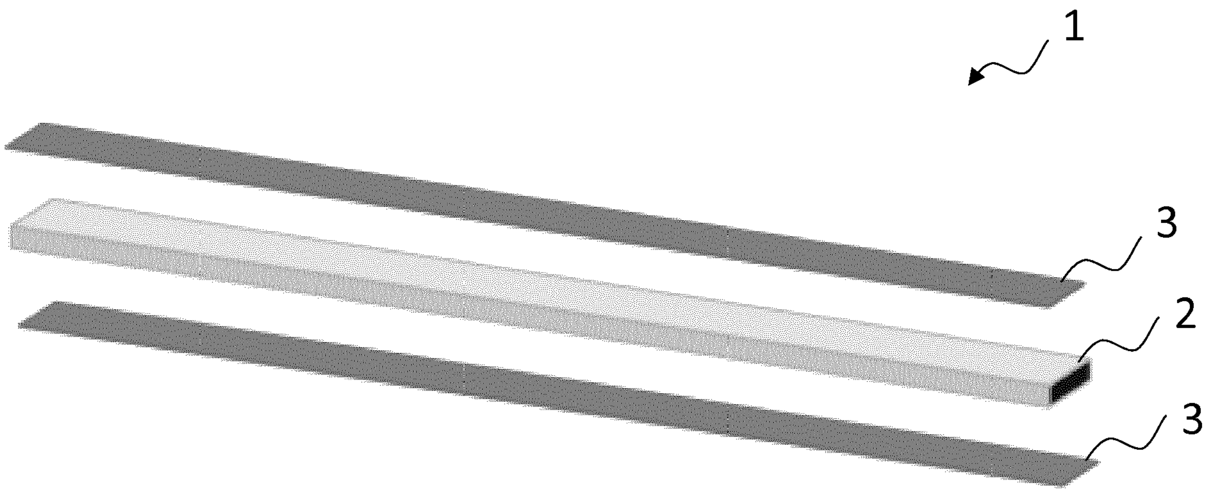


Fig. 1

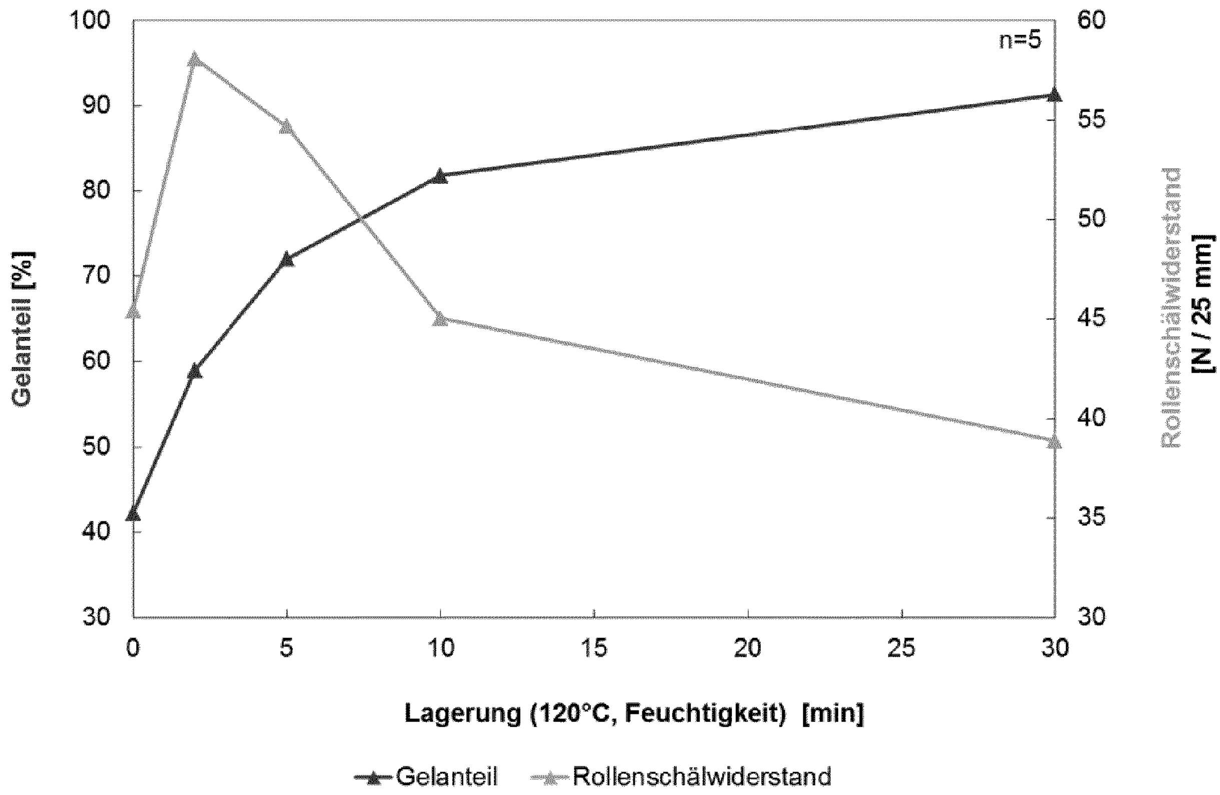

100
90
80
70
60
50
40
30
Gelanteil [%]
n=5
60
55
50
45
40
35
30
Rollenschälwiderstand
[N / 25 mm]
0
5
10
15
20
25
30
Lagerung (120°C, Feuchtigkeit) [min]
Gelanteil
Rollenschälwiderstand


Fig. 2

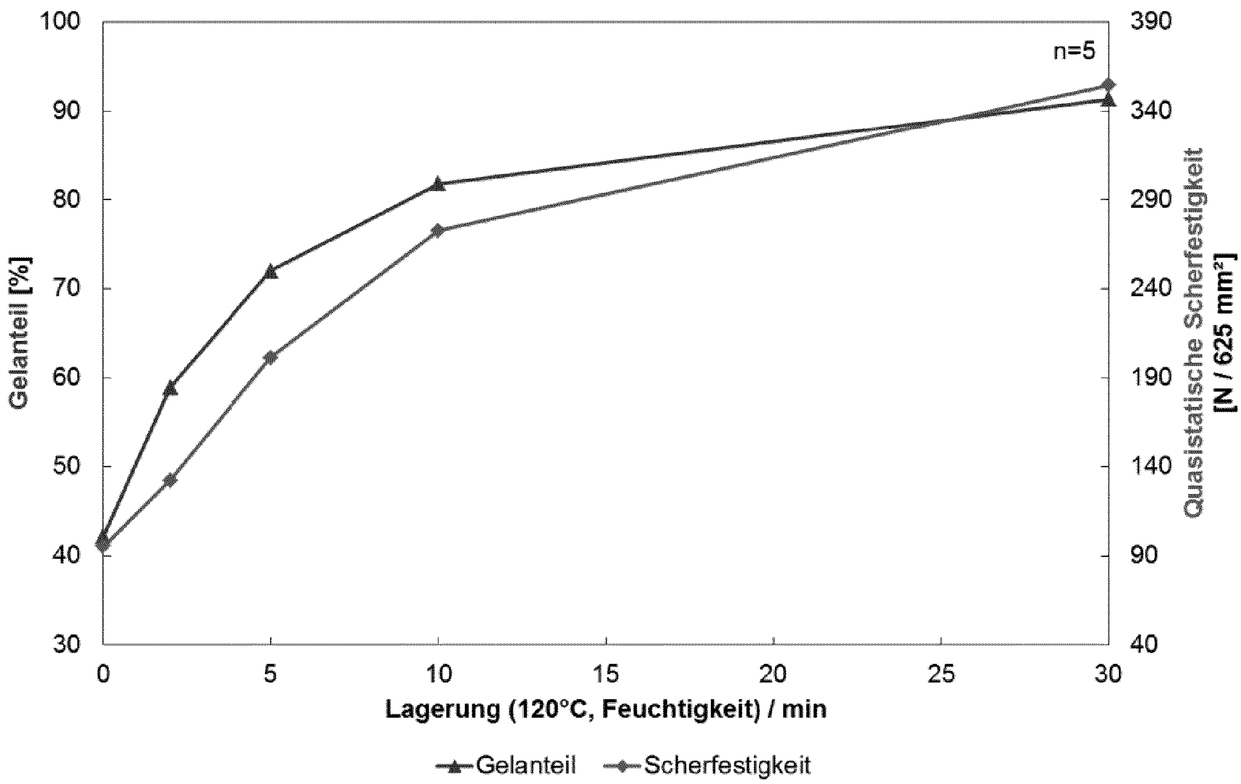
100
90
80
70
60
50
40
30
Gelanteil [%]
390
340
290
240
190
140
90
40
Quasistatische Scherfestigkeit [N / 625 mm²]
n=5
0
5
10
15
20
25
30
Lagerung (120°C, Feuchtigkeit) / min
Gelanteil
Scherfestigkeit

Fig. 3

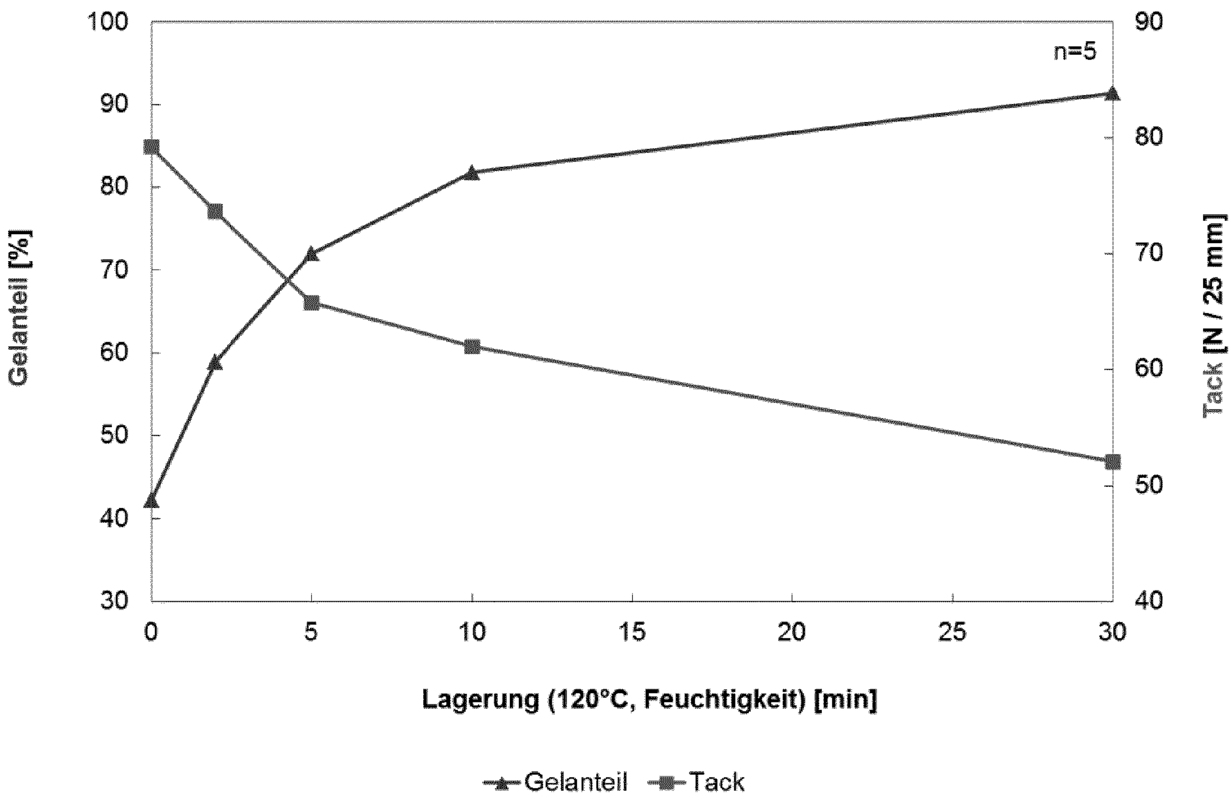
100
90
80
70
60
50
40
30
90
80
70
60
50
40
n=5
Gelanteil [%]
Tack [N / 25 mm]
0
5
10
15
20
25
30
Lagerung (120°C, Feuchtigkeit) [min]
Gelanteil
Tack

Fig. 4

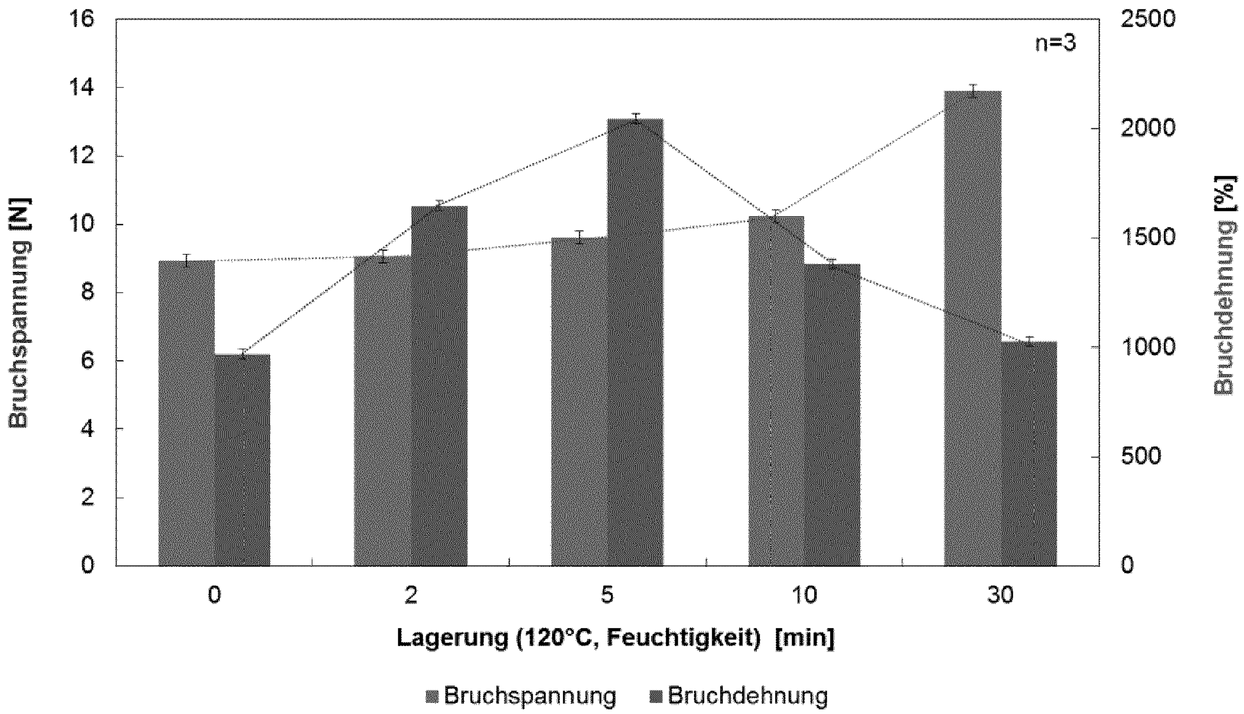
16
14
12
10
8
6
4
2
0
Bruchspannung [N]
n=3
2500
2000
1500
1000
500
0
Bruchdehnung [%]
0
2
5
10
30
Lagerung (120°C, Feuchtigkeit) [min]
Bruchspannung
Bruchdehnung

Fig. 5

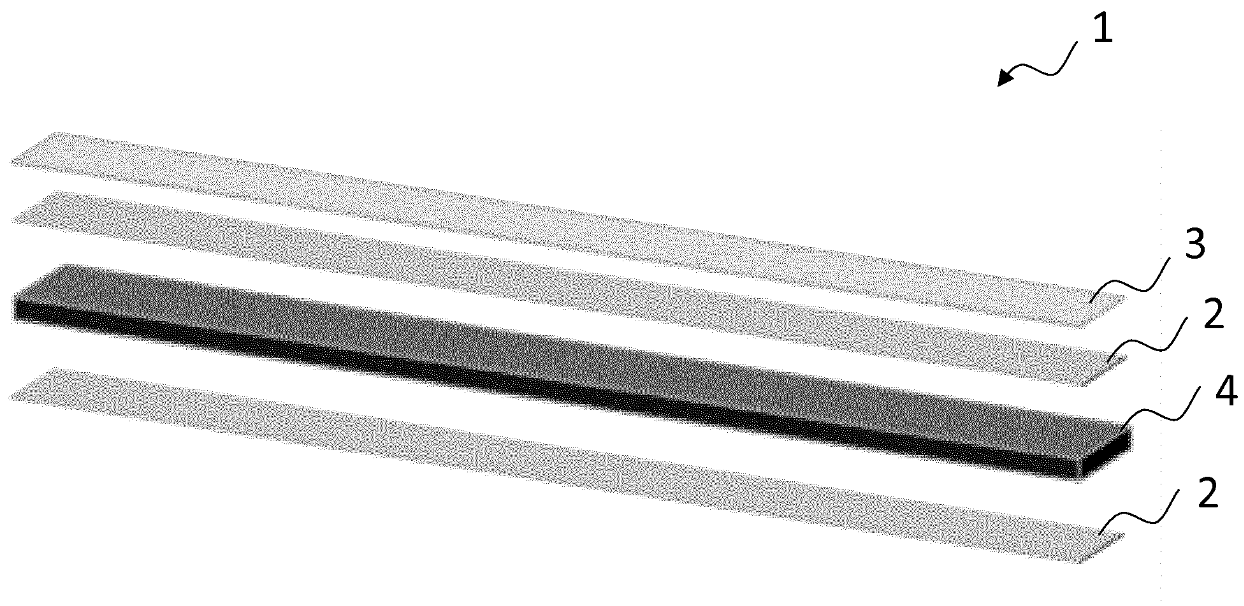


Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2883926 B1
- WO 2007085622 A1
- WO 2014029837 A1
- EP 2801596 A1
- JP H04114078 A
- DE 102004033728 A1
- US 4509949 A